# EUROPEAN PATENT APPLICATION

(11) **EP 1 658 776 A1**
(43) Date of publication of application: **24.05.2006**
(21) Application number: 04447259.5
(22) Date of filing: 23.11.2004
(51) Int. Cl.: A23K 1/18, A23K 1/17, A23K 1/175, A01N 59/16

(54) **Method for producing live food water organisms in the presence of an antibacterial**

(71) Applicant: Inve Technologies N.V., 9200 Dendermonde (BE)
(72) Inventor: Van Nieuwenhove, Luciaan Alex Johan, 11120 Nonthaburi (TH); Rombaut, Geert, B-9290 Overmere (Berlare) (BE); Decamp, Olivier, B-1090 Jette (BE); Dhert, Philippe, 9550 Herzele (BE); Naessens-Foucquaert, Eddy, B-9840 De Pinte (BE)
(74) Representative: Van Reet, Joseph

(57) **Abstract**

The live food water organisms, in particular *Artemia* naupplii or rotifers, suitable as a feed for larvae of aquaculture organisms, are allowed to develop in at least one aqueous medium to which at least one antibacterial is added which comprises silver in an antibacterial form. A toxicity reducing agent, in particular a complexing agent such as thiosulphate, can also be added to the aqueous medium to enable to use higher amounts of antibacterial silver. Further a plant alkaloid, in particular berberine, was found to provide synergetic antibacterial effects with silver.

## Description

The present invention relates to a method for producing live food water organisms, in particular *Artemia* or rotifers, suitable as a feed for larvae of aquaculture organisms, in particular for marine larval shrimp or fish. In order to reduce the number of potentially pathogenic bacteria, in particular of *Vibrio* sp. associated with live food organisms are allowed to develop in an aqueous medium to which an antibacterial is added.

Rotifers and *Artemia* are live food organisms hatched or cultured to feed marine larval shrimp or fish. It is known that especially *Artemia* nauplii are in practice heavily contaminated with bacteria, mainly *Vibrio* sp., that are potential fish or shrimp pathogens. The contamination of *Artemia* nauplii initiates during the hatching process and can reach numbers of more than 10⁷ cfu marine heterotrophic bacteria/ml culture medium (i.e. hatching or enrichment medium). *Artemia* nauplii can be considered as a possible carrier of pathogenic bacteria which can cause disease and mortality outbreaks in larval rearing of marine fish or shrimp, especially when the larvae are stressed.

Many efforts were taken to reduce this bacterial load with chemotherapeutics like antibiotics or biocides. However, the use of antibiotics should be avoided due to the risks of bacterial resistance and environmental impact. The reduction of the number of antibiotics permitted by the European and other legislations results in the absence of legal treatments for some animal species like marine fish and crustaceans. Other, broad-spectrum chemotherapeutics, on the other hand, such as e chlorine dioxide, formaldehyde, gluteraldehyde, were found to be very harmful for the live food organisms themselves or are associated with human health risks, since some of these products were causing hypersensitiveness or were carcinogenic.

To the current knowledge, only one chemotherapeutic, based on isothiazolin derivatives (WO 96/12407) was found to achieve a significant reduction of bacterial numbers without harming the live food organisms. Nevertheless, in practice this biocide faces some drawbacks.

One of these drawbacks is that when isothiazolin derivatives are mixed or applied on *Artemia* cysts, they may have a negative effect on the hatching rate of the *Artemia* within a short time period, mainly if the cysts are stored above optimal temperatures (above 4°C). Moreover, when isothiazolin derivatives are incorporated in oily substances like enrichment diets for *Artemia* nauplii, they are unstable on long time period, mainly when the emulsion is kept at room or tropical temperatures.

The object of the present invention is therefore to provide another antibacterial that can be used to reduce the number of potentially pathogenic bacteria associated with live food water organisms. In accordance with the present invention, the antibacterial added to the aqueous medium wherein the live food water organisms are allowed to develop comprises silver in an antibacterial form.

Silver compounds are already widely used for many disinfection purposes such as for the disinfection of swimming pools and drinking water, the prevention of bio-fouling, the treatment of burns, etc. Many studies have however also demonstrated the toxicity of silver for various organisms, in particular for water organisms. According to Martin, M., Osborn, K., Billig, P. and Glickstein, N. in 1981 (Marine Pollution Bulletin, Vol. 12, N°9, pp. 305-308) the toxicity levels (EC50) of silver as AgNO₃ to mussel, oyster embryos and crab larvae in natural seawater was 0.014 mg Ag/l, 0.022 mg Ag/l and 0.055 mg Ag/l respectively. In the same article it was also mentioned that in general, larvae or embryos prove to be less tolerant to toxic materials than adults of the same species. Consequently, it was quite surprising that according to the present invention silver compounds could be used as antibacterial in hatching and enrichment media for *Artemia,* in particular in amounts higher than or equal to 0.1 mg/l Ag in a hatching or enrichment medium for *Artemia.* Such silver amounts reduced the contamination of the nauplii with *Vibrio* sp. whilst viable nauplii could still be produced.

In a preferred embodiment of the method according to the invention, the aqueous medium wherein the live food water organisms are allowed to develop further comprises a toxicity reducing agent for silver ions, like agents that form chemical compounds with silver. These agents can be organic compounds, like compounds selected from the group consisting of carboxylic acids, sulfonic or sulfone acids, phosphoric acids and salts thereof, more particularly tartaric or citric acid. The agents can also be inorganic compounds, in particular a complexing agent for silver ions like thiosulphate.

It has been found that any negative effect of the antibacterial silver may have on the live food organisms may be reduced or eliminated by adding certain toxicity reducing agents to the aqueous medium without reducing however the antibacterial effect of the silver. Sometimes, the antibacterial silver in the hatching medium was for example found to delay the development of *Artemia* embryos in a hatching medium and, at higher concentrations, the antibacterial silver could even impede the hatching of the cysts. By adding an agent reducing the toxicity of silver ions, such as thiosulphate or citrate, the delay in the development of the embryos could be avoided, even when using silver concentrations upto 10 mg/l Ag or even higher. The advantage of the possibility of using these high concentrations in the culture medium (like hatching or enrichment) is that the disinfection of *Artemia* or its culture medium, can be better assured, even when there is an unusual high bacterial load or interferences with organic material coming from feed or waste material or with organic or inorganic materials present in the medium. In a further preferred embodiment of the method according to the invention, the aqueous medium wherein the live food water organisms are allowed to develop further comprises a plant alkaloid providing a synergetic antibacterial effect with said silver. The plant alkaloid comprises preferably berberine, a berberine derivative, a berberine analogue and/or a salt thereof.

Plant alkaloids, such as berberine, which have an antibacterial effect, are already known. However, relatively high concentrations are usually required to achieve the antibacterial effect. When applying the plant alkaloids in growing, hatching or enrichment media for producing live food water organisms such high concentrations are not practical and would involve too many costs. It has now been found surprisingly that synergetic antibacterial effects arise between the use of such a plant alkaloid and the use of antibacterial silver. In this way, low concentrations of the plant alkaloid can be used to increase the antibacterial effect of the silver and/or to reduce the amount of silver required to achieve the desired antibacterial effect. A reduced amount of silver, with the same activity against the pathogenic bacterial species, is not only important in view of the persistency of silver, as it is subjected in most countries to strict discharge regulations, but also in view of its cost price.

The synergetic effect between silver and berberine or other plant alkaloids can be applied in other fields as well. Adding silver to applications in which berberine is used (medical, non-medical treatments, disinfecting etc) can increase the activity against mircro organisms like bacteria, viruses, yeasts, fungi etc. Otherwise, berberine can be added to applications in which silver is used as an antimicrobial to enhance the antimicrobial effect or to reduce one or both of the antimicrobial components. Furthermore, new disinfecting applications with the combination of silver and berberine or other plant alkaloids, may be found, which till the present never were considered because of costs or high concentrations of one of the components needed.

The invention also further relates to cysts of live food organisms, in particular *Artemia* cysts, on which the antibacterial silver is mixed or added on the outer surfaces of the cysts. The advantage of the combination of cysts with silver is that the combination can be formulated as one product so that the silver in the antibacterial form does not have to be dosed separately.

The invention further relates to an enrichment product for preparing an enrichment medium for live food organisms in aquaculture. The enrichment product is characterized in that it comprises silver in an antibacterial form.

Further advantages and particularities of the present invention will become apparent from the following description of some particular embodiments according to the invention.

The method according to the present invention is intended to produce live food water organisms which are suitable as a feed for larvae of aquaculture organisms, such a fish or crustaceans (shrimp), and which are less loaded with potentially pathogenic bacteria, in particular with *Vibrio* species. The live food water organisms are in particular *Artemia* or rotifers. These live food organisms are intended in the first place for use in aquaculture, more particularly as food in early marine larval rearing, but in practice they can also be used for feeding adult fish or crustaceans, including ornamental fish.

The live food water organisms are preferably fed to the fish or crustaceans in a living state. After being produced the live food water organisms can however also be frozen to enable storage for a longer period of time. Moreover, when the live food water organisms are produced, they can also be stored in a cold environment for some time. Preferably the live food organisms are living when used as feed but, especially when they have been frozen, they may also be dead.

In the method according to the invention the contamination of the live food organisms with potentially pathogenic bacteria, in particular with *Vibrio* species, is reduced by allowing the live food organisms to develop in an aqueous medium to which an antibacterial is added. This antibacterial comprises silver in an antibacterial form, i.e. in a form wherein it enables to kill the bacteria or to suppress the growth of the bacteria. Although the method can be applied for producing other live food water organisms like rotifers, it is especially suited for producing *Artemia* nauplii. The following part of the description will therefore be given mainly with reference to the production of *Artemia* nauplii.

*Artemia* nauplii are produced from cysts. These cysts are either stored in a dry state or in a brine. In their natural state the cysts have an outer shell. Sometimes this outer shell is however removed as described for example in WO 2004/057952 so that the embryos in the cysts are only contained in a membrane. The *Artemia* cysts are hatched in an aqueous hatching medium. In this way free-swimming *Artemia* nauplii are obtained. Hatching of the cysts takes usually about 24 hours so that every day a new batch can be hatched. The hatched nauplii can be used as such as live food or they can first be enriched in an aqueous enrichment medium, for example for another 24 hours. In practice such enrichment medium comprises usually lipids, phospholipids, fatty acids and/or vitamins. The term "enrichment medium" has however to be understood in a broad meaning embracing also media comprising carotenoïds, probiotics, prebiotics and/or antibacterials different from the silver containing antibacterial. Instead of or in addition to enriching the nauplii in an enrichment medium they can also simply be maintained (stored) for some time in an aqueous medium containing no enrichment products.

In the method according to the invention contamination of the *Artemia* nauplii with potentially pathogenic bacteria, in particular with *Vibrio* species, is reduced by means of an antibacterial comprising silver in an antibacterial form. This antibacterial can be added to the hatching medium or when used to the enrichment and/or to the maintenance medium. When the *Artemia* nauplii are intended to be enriched, the antibacterial is preferably added to both the hatching medium and to the enrichment medium. The antibacterial can be added to these aqueous media after having introduced the cysts or the nauplii therein, for example a few hours later, but to achieve a maximum effect, the antibacterial is preferably added thereto either before introducing the cysts or nauplii in the aqueous medium or for example at the most 4 or 8 hours later, in the best case before most of the cysts start breaking. When adding a silver containing antibacterial both to the hatching and the enrichment medium, the antibacterial added to the hatching medium may either be the same or different from the antibacterial added to the enrichment medium.

Different forms of silver are available such as colloidal silver, silver acetate, silver acetylacetonate, silver arsenate, silver benzoate, silver (I) bifluoride, silver bromate, silver bromide, silver carbonate, silver chlorate, silver chloride, silver (I) chromate, silver citrate hydrate, silver cyanate, silver cyanide, silver cyclohexanebutyrate, silver diethyldithiocarbamate, silver difluoride, silver-exchanged zeolite, silver fluoborate, silver (I) fluoride, silver (III) fluoride, silver heptafluorobutyrate, silver hexafluoroantimonate, silver hexafluoroarsenate (V), silver hexafluorophosphate, silver hexafluorophosphate, silver (I) hydrogenfluoride, silver iodate, silver iodide, silver lactate, silver metavanadate, silver methanesulfonate, silver nitrate, silver nitrite, silver (I) oxide, silver oxide, silver pentafluoropropionate, silver perchlorate, silver perchlorate monohydrate, silver (I) permanganate, silver (I) perrhenate, silver phosphate, silver protein, silver (I) selenide, silver (I) sulfadiazine, silver sulfate, silver (I) sulfide, silver (I) sulfite, silver (I) telluride, silver tetrafluoroborate, silver tetratungsgate, silver thiocyanate, silver p-toluenesulfonate, silver trifluoroacetate, silver trifluoromethanesulfonate. Moreover, there are other forms of silver which can not be stored for a long time but which can be prepared starting from the above silver compounds before adding them to the aqueous medium or which can be produced from these silver compounds in the aqueous medium itself. An important example hereof is silver thiosulphate. Moreover, it is clear that by adding the above described silver compounds to the aqueous medium, other salts may be formed in the medium.

The antibacterial added to the aqueous medium comprises the silver preferably in a form selected from the group consisting of colloidal silver, silver acetate, silver chloride, silver citrate hydrate, silver iodate, silver iodide, silver lactate, silver nitrate, silver nitrite, silver (I) oxide, silver oxide, silver phosphate, silver protein, silver (I) sulfadiazine, silver sulfate, silver (I) sulfide, silver (I) sulfite and silver thiosulphate (prepared by mixing for example solutions of silver nitrate and sodium thiosulphate in water).

The antibacterial is preferably added in an amount of at least 0.1 mg Ag/l medium. When adding no other antibacterial products the antibacterial is preferably added in an amount of at least 0.5 mg Ag/l medium, and more preferably even in higher amounts of at least 0.75 mg Ag/l or at least 1.0 mg Ag/l, to assure the required antibacterial effect under different circumstances. In practice, the antibacterial effect may indeed depend on a number of parameters of the aqueous medium such as the bacterial load, the presence of impurities or of certain salts, etc. In view of the cost of the antibacterial treatment and the persistency of the silver the amount of antibacterial added to the aqueous medium is preferably lower than 15 mg Ag/l medium, more preferably lower than 10 mg Ag/l medium and most preferable lower than 5 mg Ag/l.

For lower amounts of silver added to the medium, in particular for amounts lower than 1.5 mg Ag/l medium, it has been found that the presence of silver in the medium has substantially no effect on the development of the *Artemia.* In particular it has been found that such low amounts might have some effect on the hatching of the cysts but the cysts could still be hatched within 24 hours. Moreover, when added to the enrichment medium, it has been found that the enrichment of the *Artemia* nauplii was not affected by the presence of the silver. On the contrary, the enrichment of the nauplii could even be improved. In the examples given hereinafter this has been demonstrated in particular for the enrichment of *Artemia* nauplii with n-3 HUFA's, EPA and DHA. Especially the enrichment with DHA and the level of DHA/EPA in the nauplii is of great importance for the larval aquaculture organisms that are fed on the enriched Artemia.

The present invention also enables to add higher amounts of silver to assure an even more reliable antibacterial effect under various conditions. It has more particularly been found that it is possible to add agents to the aqueous medium which reduce the toxicity of silver ions for the live food water organisms whilst still maintaining its antibacterial effect. For *Artemia* amounts of 10 mg Ag/l medium and higher could for example be added to the hatching and to the enrichment medium without impeding or even hampering the development of the *Artemia.*

The toxicity reducing agent may first of all be a complexing agent for silver ions such as thiosulphate Other toxicity reducing agents can be agents that form chemical compounds with silver like organic compounds selected from the group of carboxylic acids, sulfonic or sulfone acids, phosphoric acids and salts thereof, more preferably tartaric acid and salts thereof or citric acid and salts thereof. In the most preferred embodiment the toxicity reducing agent is thiosulphate. This thiosulphate can be added to the aqueous medium in the form of a water soluble salt, in particular as sodium thiosulphate. However, it can also be added in the form of a silver complex comprising thus at the same time the anti bactericidal silver and the toxicity reducing agent. The silver thiosulphate complex [Ag(S₂O₃)₂]³⁻ can be prepared by mixing a silver salt such as AgNO₃ in water with a thiosulphate compound such as sodium thiosulplate. This can be done either in the aqueous medium itself or in an aqueous solution prepared before being added to the medium. According to the formula of the silver complex only two moles of the thiosulphate are required per mole silver but to enhance the complex formation use is preferably made of at least three moles of thiosulphate per mole silver.

From the above description it is clear that the silver containing antibacterial and also the toxicity reducing agent can be added as such, or in a mixture with other additives, for example in the form of a water conditioner comprising for example a pH stabiliser, to the aqueous medium. ln a preferred embodiment, the antibacterial and/or the toxicity reducing agent are however applied to outer surfaces of *Artemia* cysts. In this way, no additional steps have to be taken to provide, weigh and add those agents to the aqueous medium. For applying the antibacterial and the toxicity reducing agent to the cysts, use is preferably made of water soluble substances which can be sprayed or otherwise applied onto the cysts in the form of an aqueous solution.

For achieving those aqueous solutions, use can be made for the antibacterial silver for example of silver nitrate and for the toxicity reducing agent of sodium thiosulphate. In view of the reactivity of the two agents, two solutions are preferably prepared which are applied separately onto the cysts. Instead of spraying all the cysts with the two solutions, preferably one portion of the cysts is sprayed with one solution and another portion of the cysts with another solution. ln this way, the cysts have to be treated only once instead of twice. Both portions of the cysts can then be mixed easily in the required ratio.

When the cysts are stored in brine, the antibacterial and/or the toxicity reducing agent can be added to that brine.

In case of an enrichment medium, the antibacterial and/or the toxicity reducing agent can be added to the enrichment product used to prepare the enrichment medium. Such an enrichment product comprises in particular one or more lipids, phospholipids, fatty acids, vitamins, carotenoïds, probiotics, prebiotics and/or antibacterials. The enrichment medium is intended to incorporate or store certain substances or even micro-organisms (probionts) in the live food organisms which are intended to have a beneficial effect on the prey organisms fed with these live food organisms. The enrichment product may contain in particular DHA and optionally EPA. These fatty acids are incorporated in the method according to the invention more effectively in the *Artemia* nauplii, with DHA even more effectively than EPA, so that the *Artemia* nauplii provide a valuable source of DHA and EPA, even in a desired relatively high DHA/EPA ratio important for enhancing the development of larvae of fish or crustacean.

As described here above, when adding no other antibacterial products, the silver comprising antibacterial is preferably added in an amount of at least 0.5 mg Ag/l medium, and more preferably even in higher amounts of at least 0.75 mg Ag/l or at least 1.0 mg Ag/l, to assure the required antibacterial effect under various circumstances. Quite by surprise it has now been found that the amount of silver required to assure this antibacterial effect can be reduced (to an amount as low as about 0.1 mg Ag/l medium) or the antibacterial effect of the silver can be improved or made more reliable by using the silver in combination with a plant alkaloid, more particularly in combination with a plant alkaloid which provides, at relatively high concentrations, also some antibacterial effects. It has more particularly been found that such plant alkaloids provide a synergetic antibacterial effect with silver, i.e. they can improve the antibacterial effect of silver in concentrations wherein they provide no or almost no antibacterial effects.

The plant alkaloid which is preferably used in combination with the silver containing antibacterial comprises berberine, a berberine derivative, a berberine analogue and/or a salt or combinations thereof. Berberine is a plant alkaloid which can be found in the roots, rhizomes and stem bark of different plants like *Coptis chinensis, Berberis vulgaris* etc. Berberine extracts and decoctions have demonstrated significant antimicrobial activity against a variety of organisms including bacteria when used in relatively high amounts. The inhibitory activity of berberine was determined in the range of 50-400 mg/l against gram-positive bacteria (Kim, S., Shin, D., Oh, M., Chung, S., Lee, J. and Oh, K. 2004. Biosci. Biotechnol. Biochem., 68 (2), pp. 421-424). Surprisingly, an effective reduction in bacterial counts in the medium of *Artemia* can be achieved when the silver compound is combined with the berberine compound in concentrations far below the concentrations that would be needed to achieve the same bacterial reduction when used separately. The advantage of this synergetic effect is the possibility of the reduction of the silver compound, which is an expensive and persistent agent, in the many applications in which silver is used as an antibacterial agent.

The plant alkaloid is preferably added in an amount of at least 0.1 mg/l medium, preferably in an amount of at least 0.5 mg/l medium and more preferably in an amount of at least 1 mg/l medium. As such, such low amounts of berberine produce no antibacterial effects but in combination with silver they provide synergetic antibacterial effects.

The plant alkaloid can be added in the same way to the aqueous medium as the silver containing antibacterial. When added to the hatching medium, it is however preferably added directly thereto instead of being adhered first to the cysts. However, when adding it to the enrichment medium, it is preferably included in the enrichment product used to produce the enrichment medium.

The invention will now be illustrated by means of a number of specific examples. A number of test results achieved in these examples are contained in the annexed drawings wherein:
Figures 1 a and 1b illustrate the difference in hatching percentages of cysts treated with a silver containing antibacterial and cysts treated with isothiazolin derivatives. The hatching percentages were determined after 1, 2, 4 and 8 weeks of storage at different temperatures; and
Figure 2 illustrates the reduction of *Vibrio* sp. (cfu/ml) by the combination of silver (Ag) or silver thiosulphate (Ag-T) in concentrations of 0.10 and 0.25 mg Ag/l with different concentrations of berberine (0, 0.1, 0.5, 1 and 2.5 mg/l).

### Example 1: Silver applied on cysts, bacterial counts and hatching percentage

1000 g commercially available dry cysts from Great Salt Lake (GSL-strain) were sprayed with 20 ml solution to which 2.43g or 2.02g AgNO₃ is added and another 1000 g cysts were sprayed with 20 ml to which 14.20g or 11.81g thiosulphate (Na₂S₂O_{3.}5(H₂O)) is added (in a ratio of 4 mol thiosulphate to 1 mol AgNO₃) to obtain respectively 1.50 or 1.25 mg Ag/l in the hatching medium, after incubation of 2g treated cysts therein. The cysts were gently mixed for 15-30 minutes while spraying. Both fractions were mixed together in a ratio of (1:1). The cysts were vacuum packed and stored at different temperatures (4°C, 20°C and 30°C). Cysts from the same batch were kept as a control. After 4 weeks they were incubated at 2g (treated) cysts /l, following standard procedures, i.e.: salinity of 25 g/I, temperature of 30°C. Continuous illumination and air bubbling was provided. After 24 hours of incubation, samples of the hatching medium were taken for determination of the total count on Marine agar (MA) and *Vibrio* sp. on TCBS (specific growth medium for *Vibrio* sp.). The hatching percentage (percentage of cysts that hatch on the total of full cysts) of the cysts was calculated.

**Tabel 1: Hatching percentage (HP) of cysts, number of colony forming units (cfu) per ml of hatching medium on MA and on TCBS after 24h incubation of Artemia cysts of control cysts and cysts with different amounts of AgNO₃ (expressed as mg Ag/l hatching medium). Each value is the average of three counts.**

| Treatment | HP (%) | MA (cfu/ml) | TCBS (cfu/ml) |
|---|---|---|---|
| Storage temperature 4°C | | | |
| Control | 83.3 | 4.42 x 10⁷ | 6.90 x 10⁵ |
| 1.25 mg/l Ag | 84.5 | 2.69 x 10⁷ | <3.00 x 10² |
| 1.50 mg/l Ag | 81.4 | 1.20 x 10⁷ | <3.00 x 10² |

| Storage temperature 20°C | | | |
|---|---|---|---|
| Control | 80.4 | 4.20 x 10⁶ | 4.81 x 10⁵ |
| 1.25 mg/l Ag | 80.3 | 1.29 x 10⁷ | 5.66 x 10³ |
| 1.50 mg/l Ag | 82.2 | 8.07 x 10⁶ | <3.00 x 10² |

| Storage temperature 30°C | | | |
|---|---|---|---|
| Control | 82.0 | 8.53 x 10⁶ | 2.72 x 10⁵ |
| 1.25 mg/l Ag | 82.6 | 3.17 x 10⁷ | <3.00 x 10² |
| 1.50 mg/l Ag | 81.2 | 6.55 x 10⁶ | <3.00 x 10² |

*Artemia* cysts, onto which silver nitrate and thiosulphate was applied, hatched in a much less contaminated medium compared to control treatment. After 24 hours, the medium of the control treatment contained on TCBS (*Vibrio* sp.) up to 10⁶ cfu/ml, while in the medium with treated cysts, this number was reduced to <300 cfu/ml. The total counts on Marine Agar were not affected (marine heterotrophic bacterial population), but the amount of possible pathogenic bacteria (*Vibrio* sp.) was completely reduced in most cases.

### Example 2: Silver applied on cysts compared to other biocide applied on cysts during storage under different temperatures

1000 g commercially available dry cysts (GSL-strain) were sprayed with a 20 ml solution to which 2.43g AgNO₃ and another 1000g cysts were sprayed 20 ml solution to which 14.20g thiosulphate (Na₂S₂O₃.5(H₂O)) was added. The cysts were gently mixed for 15 - 30 minutes while spraying. Both fractions of cysts were mixed together in a ratio of [1:1]. The cysts were vacuum packed and stored at different temperatures (4°C, 20°C and 30°C) for 1 to 8 weeks. At different time intervals (1 week, 2 weeks, 4 weeks and 8 weeks) they were incubated at 2g (treated) cysts /l following standard procedures, i.e.: salinity of 25 g/l, temperature of 30°C. Continuous illumination and air bubbling was provided. After 24 hours, the hatching percentage (percentage of cysts that hatch on the total of full cysts) was calculated. These values were compared with a former batch of cysts on which 1.4 mg/l of the bactericidal isothiazolin derivative comprising 5-chloro-2-methyl-4-isothiazolin-3-one and 2-methyl-4-isothiazolin-3-one was applied.

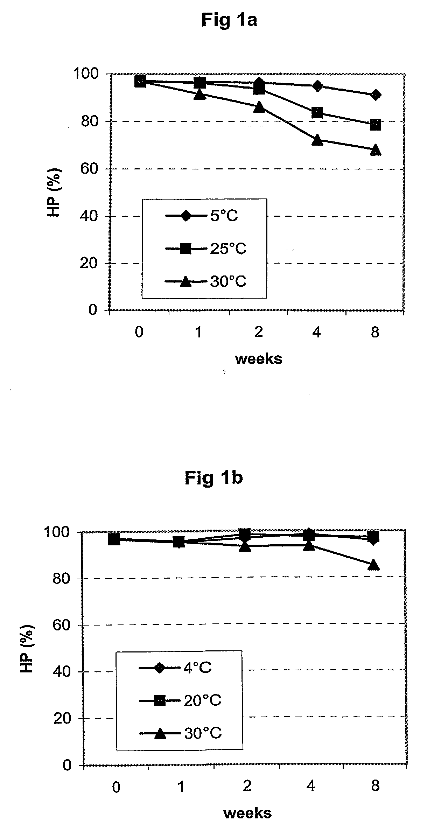

Cysts on which isothiazoline derivative was applied and stored at 4°C still had a hatching percentage comparable with untreated cysts (see figures 1a and 1b). The hatching percentages of cysts kept at higher temperatures however, decreased considerably after 1 to 8 weeks of storage. Hatching percentage of the cysts on which AgNO₃ was applied, did not decrease after 1 to 8 weeks of storage under temperatures of 20° C or more.

### Example 3: Silver with or without thiosulphate in aqueous medium during the hatching of cysts

GSL-cysts were incubated at 2g cysts /l, following standard procedures, i.e.: salinity of 25 g/l, temperature of 30°C. Continuous illumination and air bubbling was provided. Different concentrations of silver nitrate were added to the hatching medium. Thiosulphate was added to compare its effect on the hatching of *Artemia* and reduction of *Vibrio* sp. When thiosulphate was added, the molecular ratio of silver nitrate to thiosulphate was (1:4). After 24 hours, samples of the hatching medium were taken for determination of *Vibrio* sp. on TCBS and hatching percentage was calculated. The results are presented in Table 2.

**Table 2: Effect of thiosulphate in combination with Ag, on hatching percentage of Artemia and on the amount of Vibrio species in the hatching medium**

| Ag (mg/l) | Hatching percentage (%) | | *Vibrio* counts on TCBS (cfu/ml) | |
|---|---|---|---|---|
| | Without thiosulphate | With thiosulphate | Without thiosulphate | With thiosulphate |
| **0** | 78.7 | | 7.96 10⁶ | |
| **0.1** | 77.1 | 79.9 | 7.96 x 10⁶ | 1.47 x 10⁵ |
| **0.25** | 76.6 | 78.6 | 1.79 x 10⁵ | 1.70 x 10⁴ |
| **0.5** | 78.3 | 76.0 | 3.48 x 10⁴ | <3.00 x 10² |
| **0.75** | 73.9 | | 6.23 x 10² | |
| **1.0** | 72.5 | 74.4 | 4.80 x 10² | <3.00 x 10² |
| **1.25** | 75.5 | | <3.00 x 10² | |
| **1.5** | 71.1 | 76.3 | <3.00 x 10² | <3.00 x 10² |
| **1.75** | 69.9* | | <3.00 x 10² | |
| **2.0** | 65.0* | 74.3 | <3.00 x 10² | <3.00 x 10² |
| **2.5** | 50.0* | 75.6 | | <3.00 x 10² |
| **5.0** | 28.0* | 77.6 | | <3.00 x 10² |
| **10.0** | 0 | 77.1 | | <3.00 x 10² |

| | | | | |
|---|---|---|---|---|
| * hatching is delayed (the maximal HP is not reached after 24 h) | | | | |

Reduction of *Vibrio* sp. at low concentrations of Ag (0.50 mg/l) is more assured when it is combined with thiosulphate.
Concentrations higher than 1 mg/l Ag without thiosulphate reduce the *Vibrio* sp. in the hatching medium of the *Artemia* nauplii but they also may reduce the hatching percentage of the *Artemia* or delay the hatching procedure (>24 hours). For practical reasons a delay of the hatching is not optimal for hatcheries since they work with a tight daily time schedule. At very high concentrations (> 10 mg/l), *Artemia* nauplii do not hatch at all.
Adding thiosulphate (4 mol per 1 mol AgNO₃) takes away the risk of the delay or reduction in hatching considerably. Even when Ag is added in relatively high concentrations (more than 2 mg/l till at least 10 mg/l), the hatching of the *Artemia* naupllii is still not affected.

### Example 4: syneretic effect between Silver and berberine during hatching of cysts

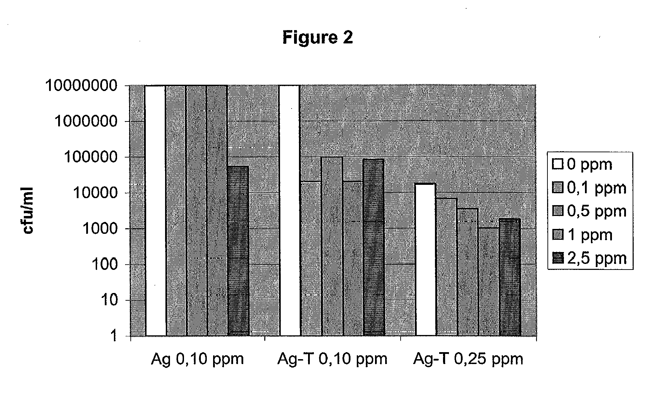

GSL-cysts were incubated at 2g cysts /l, following standard procedures, i.e.: salinity of 25 g/l, temperature of 30°C. Continuous illumination and air bubbling was provided. Silver nitrate, thiosulphate and berberine were added in different concentrations to the hatching medium. After 24 hours, the hatching percentage was calculated and samples of the hatching medium were taken for determination of *Vibrio* sp. on TCBS. The results are presented in Figure 2.

Concentrations as low as 0.1 mg Ag per liter (with or without thiosulphate) are usually not sufficient to decrease the *Vibrio* sp. in the hatching medium of *Artemia* naupllii, but when berberine is added together with the silver in concentrations from 0.1 mg/l to 2.5 mg/l, some reduction in *Vibrio* species is observed. At higher concentrations of Ag, the synergetic effect can be less noticed but some additional small reductions due to the berberine can still be present.

### Example 5: Silver in enrichment diet for Artemia naupllii

*Artemia* nauplii Instar I were harvested from the hatching tank, rinsed and incubated in cylindrical conical tanks with 90L water with a salinity of 35 g/l and a temperature of 28°C. The pH was controlled at 7.5. Stocking density of the nauplii was 300 nauplii / ml. The enrichment product 'Easy DHA Selco' which is a commercially available Seleco™-type enrichment product was added at the start of the enrichment at 600 mg/l. The dose of the silver (silver thiosulphate) in three of the six enrichment tanks was 1.5 mg Ag /l. In the three other tanks, Ag was not added. Samples of *Artemia* nauplii to analyse the levels of HUFA were taken at the end of the enrichment, thus 24 hours after adding the enrichment diets. At the same time, samples of the enrichment medium were taken for determination of *Vibrio* sp. on TCBS. The results are presented in Table 3.

**Table 3: Highly unsaturated fatty acid levels (mg/g DW) of Artemia nauplli Instar II and bacterial concentrations (cfu/ml) on marine agar and TCBS of the enrichment medium after 24 hours enrichment with and without silver.**

| | Enrichment Control (no Ag added) | Enrichment in which Ag is added |
|---|---|---|
| (n-3) HUFA | 36.27 ± 2.00 | 71.63 ± 7.86 |
| DHA | 15.93 ± 1.21 | 36.30 ± 4.69 |
| EPA | 15.83 ± 0.70 | 28.23 ± 2.48 |
| DHA / EPA | 1.01 ± 0.03 | 1.28 ± 0.06 |
| Marine Agar | 2.99 10⁷ | 2.53 10⁷ |
| TCBS | 2.16 10⁷ | 2.83 10³ |

The *Vibrio* count on TCBS after 24 hours enrichment is significantly less in the culture medium treated with Ag compared to the non treated culture medium. The presence of antibacterial silver resulted in a better incorporation of the total (n-3) highly unsaturated fatty acids (n-3) HUFA and docosahexaenoic acid (DHA) in the enriched *Artemia.* The ratio of DHA: EPA (eicosapentaenoic acid) in the treated tanks is significantly higher compared to the *Artemia* in the not treated tanks.

When *Artemia* nauplii enriched in the presence of Ag, were fed for 14 days to larval shrimp, a reduction in pathogenic *Vibrio* sp. was noticed in the shrimp tanks as compared to the shrimp tanks in which *Artemia* nauplii from the control enrichment were introduced.

Based on the synergetic antibacterial effects between the plant alkaloid and the silver containing antibacterial observed in the above examples, it is contemplated that these synergetic effects can also be used in fields other that the production of live food water organisms, more particularly in therapeutic and non-therapeutic applications.

The invention therefore generally further relates to the use of an antimicrobial comprising silver and a plant alkaloid providing a synergetic antimicrobial effect with silver.

Silver is used in many applications and formulations for disinfecting purposes or to prevent contamination with micro-organisms. Some of these formulations comprise therapeutic or non-therapeutic, in particular cosmetic formulations suitable for human and/or veterinary use. To obtain the desired disinfection purpose in such formulations, relatively high concentrations of the active silver component have to be incorporated. These high concentrations often have undesirable side effects such as skin and eye irritation, in addition to being potentially hazardous when in contact with food and quite often being potentially hazardous when discharged in the environment. It is desirable to achieve disinfection action using low levels of the antimicrobial agent that will not pose toxicity problems for the user and/or the environment. Moreover, lower levels of silver in antimicrobial formulations will also reduce the cost price of the formulation.

Plant alkaloids, more specifically berberine, berberine derivatives and/or analogues thereof, have documented antimicrobial activities against a variety of organisms, including bacteria, viruses, fungi and protozoans. Currently, the predominant clinical uses of berberine include bacterial diarrhea and occular trachoma infections. Berberine is not considered toxic at doses used in clinical studies but it can be costly and difficult to incorporate the relative high dose in antimicrobials. Therefore, it is desirable to lower the effective dose to reduce costs and facilitate formulating.

Therefore, the invention relates to the use of the combination of silver with a plant alkaloid providing a synergetic effect to be used as a disinfectant and/or a general biocidal product, which can be used for human hygiene or cosmetic purposes or disinfecting purposes of surfaces, materials, equipment and furniture in private, public and industrial areas, including hospitals. Usage areas include especially swimming pools, aquariums, bathing and other waters, air-conditioning systems, walls and floors in health and other institutions, chemical toilets and waste water. Both components can be delivered in cleaning products like washing liquids, powders, lotions, creams, gels, pastes, sprays and similar products, especially those products that need to come into contact with a liquid medium when used for its disinfection purpose.

ln the same way, the antimicrobial composition can also be used in products for veterinary hygiene purposes, including products used in areas in which animals are housed, kept or transported. It can also be used for the disinfection of equipment, containers, consumption utensils, surfaces or pipework associated with the production, transport, storage, processing or consumption of food, feed or drink (including drinking water) for humans and animals. Further, it can also be used for the disinfection of drinking water as such for both humans and animals, since in the required dose for disinfection, both components, because of their synergetic effect, can be delivered in health acceptable concentrations.

Besides disinfectant or biocide, the composition can also be used for the preservation of manufactured products, including food or feed, in particular the ones stored in containers to ensure their shelf life by the control of microbial deterioration. Other applications in this area can be the use for the preservation for liquid-cooling and processing systems, particularly to prevent antifouling of structures in contact with water

Since the effective dose of silver in combination with berberine might be acceptable low for ingestion by humans or animals, the antibacterial composition could also serve for therapeutic applications. In this sense, the antimicrobial may be delivered in capsules, tablets, powders, emulsions and the like or on a carrier, more particularly on a pharmaceutical acceptable carrier for administering the active ingredients in an effective amount to humans or animals. The plant alkaloid may, if desired, be in one composition or in a composition, different from the silver compound or complex to be used simultaneously with the plant alkaloid or separated, more particularly sequentially, but with the aim to achieve the synergetic effect, in particular the antimicrobial effect by the use of both components.

## Claims

1. A method for producing live food water organisms, in particular *Artemia* nauplii or rotifers, suitable as a feed for larvae of aquaculture organisms, in which method the live food organisms are allowed to develop in at least one aqueous medium to which at least one antibacterial is added, **characterised in that** the antibacterial comprises silver in an antibacterial form.

2. A method according to claim 1, **characterised in that** the live food water organisms are *Artemia* nauplii and said at least one aqueous medium comprises a hatching medium wherein the *Artemia* nauplii are hatched out of cysts and to which said antibacterial is added.

3. A method according to claim 1 or 2, **characterised in that** the live food water organisms are *Artemia* nauplii and said at least one aqueous medium comprises an enrichment medium to which said antibacterial is added and wherein the *Artemia* nauplii are enriched with at least one product selected from the group consisting of lipids, phospholipids, fatty acids, vitamins, carotenoïds, probiotics, prebiotics and antibacterials different from said silver containing antibacterial.

4. A method according to claims 2 and 3, **characterised in that** the live food water organisms are *Artemia* nauplii which are hatched out of cysts in the hatching medium in the presence of a first antibacterial comprising silver in a antibacterial form and which are subsequently enriched in the enrichment medium in the presence of a second antibacterial comprising also silver in a antibacterial form, the first antibacterial being either the same as or different from the second antibacterial.

5. A method according to claim 2 or 4, **characterised in that** said antibacterial is added to the hatching medium by introducing cysts therein which have outer surfaces onto which said antibacterial is applied, preferably in a water soluble form, or which are contained in a brine comprising said antibacterial.

6. A method according to any one of the claims 1 to 5,
**characterised in that** an agent reducing the toxicity of silver ions in the aqueous medium is added to the aqueous medium.

7. A method according to claim 6, **characterised in that** the toxicity reducing agent is selected from the group consisting of carboxylic acids, sulfonic or sulfone acids, phosphoric acids and salts thereof, preferably from the group consisting of tartaric acid and salts thereof, citric acid and salts thereof, and thiosulphate.

8. A method according to claim 6 or 7, **characterised in that** the toxicity reducing agent is a complexing agent for silver ions.

9. A method according to any one of the claims 6 to 8,
**characterised in that** the live food water organisms are *Artemia* nauplii and said at least one aqueous medium comprises a hatching medium to which said antibacterial is added and wherein the *Artemia* nauplii are hatched out of cysts, the toxicity reducing agent being added to the hatching medium by introducing cysts therein which have outer surfaces onto which the toxicity reducing agent is applied, preferalby in a water soluble form.

10. A method according to claim 9, **characterised in that** said antibacterial and the toxicity reducing agent are added to the hatching medium by introducing cysts therein, a first portion of which have outer surfaces onto which the antibacterial is applied while a second portion of which, different from the first portion, have outer surfaces onto which the toxicity reducing agent is applied.

11. A method according to any one of the claims 1 to 10,
**characterised in that** said antibacterial is added to the aqueous medium in a form selected from the group consisting of colloidal silver, silver acetate, silver chloride, silver citrate hydrate, silver iodate, silver iodide, silver lactate, silver nitrate, silver nitrite, silver (I) oxide, silver oxide, silver phosphate, silver protein, silver (I) sulfadiazine, silver sulfate, silver (I) sulfide, silver (I) sulfite and silver thiosulphate.

12. A method according to any one of the claims 1 to 11,
**characterised in that** a plant alkaloid providing a synergetic antibacterial effect with said silver is further added to the aqueous medium.

13. A method according to claim 12, **characterised in that** the plant alkaloid comprises berberine, a berberine derivative, a berberine analogue and/or a salt thereof.

14. A method according to claim 12 or 13, **characterised in that** the plant alkaloid is added to the aqueous medium in an amount of at least 0.1 mg/l medium, preferably in an amount of at least 0.5 mg/l medium and more preferably in an amount of at least 1 mg/l medium.

15. A method according to any one of the claims 1 to 14,
**characterised in that** the antibacterial is added to the aqueous medium in an amount of at least 0.1 mg Ag/l medium, preferably in an amount of at least 0.5 mg Ag/l medium, more preferably in an amount of at least 0.75 mg Ag/l medium and most preferably in an amount of at least 1.0 mg Ag/l medium.

16. A method for increasing the efficiency of enriching *Artemia* nauplii in an enrichment medium, in particular for increasing the efficiency of enriching *Artemia* nauplii with DHA in a DHA containing enrichment medium, **characterised in that** the *Artemia* nauplii are enriched in an enrichment medium to which an antibacterial comprising silver in an antibacterial form is added, in particular in accordance with a method as claimed in any one of the claims 1 to 15.

17. A method for culturing aquaculture organisms, in particular fish or crustaceans, comprising the steps of producing live food water organisms and feeding the produced live food water organisms to the aquaculture organisms, in particular to larvae thereof, **characterised in that** the live food water organisms are produced in accordance with a method according to any one of the claims 1 to 15.

18. *Artemia* cysts, in particular *Artemia* cysts for use in a method according to any one of the claims 1 to 17, at least a first portion of which have outer surfaces onto which an antibacterial is applied, **characterised in that** the antibacterial comprises silver in a antibacterial form.

19. *Artemia* cysts according to claim 18, **characterised in that** at least a second portion of the cysts have outer surfaces onto which an agent reducing the toxicity of said silver is applied, the second portion of the cysts being preferably different from the first portion thereof.

20. Enrichment product comprising at least one product selected from the group consisting of lipids, phospholipids, fatty acids, vitamins, carotenoïds, probiotics, prebiotics and antibacterials for preparing an enrichment medium for enriching live food water organisms suitable as feed for larvae of aquacultural organisms, in particular an enrichment medium for use in a method according to any one of the claims 1 to 17, which enrichment product comprises an antibacterial, **characterised in that** the antibacterial comprises silver in a antibacterial form.

21. Enrichment product according to claim 20,
**characterised in that** it further comprises a plant alkaloid providing a synergetic bactericidal effect with said silver, the plant alkaloid being in particular berberine, a berberine derivative, a berberine analogue and/or a salt thereof.

22. An enrichment product according to claim 20 or 21,
**characterised in that** it comprises DHA.

23. Use, in particular a non-therapeutic use, of a combination of silver in an antimicrobial form and a plant alkaloid providing a synergetic antimicrobial effect with said silver, in particular berberine, a berberine derivative, a berberine analogue and/or a salt thereof, as antimicrobial, in particular as antibacterial.

24. Antimicrobial, in particular antibacterial, composition comprising at least silver in an antimicrobial form and a plant alkaloid providing a synergetic antimicrobial effect with said silver, in particular berberine, a berberine derivative, a berberine analogue and/or a salt thereof.

25. Product containing silver in an antimicrobial form and a plant alkaloid providing a synergetic antimicrobial effect with said silver, in particular berberine, a berberine derivative, a berberine analogue and/or a salt thereof, as a combined preparation for simultaneous, separate or sequential use as antimicrobial, in particular as antibacterial.

26. Product according to claim 25 containing further an agent reducing the toxicity of silver ions as a combined preparation for simultaneous, separate or sequential use with said silver and said plant alkaloid.
